# EUROPEAN PATENT APPLICATION

(11) **EP 1 609 575 A1**
(43) Date of publication of application: **28.12.2005**
(21) Application number: 04724384.5
(22) Date of filing: 30.03.2004
(51) Int. Cl.: B29C 39/26, B29C 39/02, B29C 33/72, G02C 13/00, G02C 7/02

(54) **LENS MOLDING DIE ASSEMBLING DEVICE, LENS MOLDING DIE WASHING METHOD, AND LENS MOLDING DIE ASSEMBLING METHOD**

(30) Priority: 31.03.2003 JP 2003095979
(71) Applicant: SEIKO EPSON CORPORATION, Shinjuku-ku, Tokyo 163-0811 (JP)
(72) Inventor: SANO, Yoshio, Suwa-Shi, Nagano 3928502 (JP)
(74) Representative: Hoffmann, Eckart
(86) International application number: PCT/JP2004/004558
(87) International publication number: WO 2004/087396

(57) **Abstract**

An apparatus is constructed by accommodating in one dust-proof room (11), a concave-mold first cleaning device (21) which abrades the convex-surface forming surface (101) of a concave mold (1), a concave-mold second cleaning device (22), a concave-mold drying device (23), a convex-mold first cleaning device (24) which abrades a concave-surface forming surface for a lens, a convex-mold second cleaning device (25), a convex-mold drying device (26), an inversion device (30) which inverts the concave mold (1) or a convex mold (2) up or down, a positioning device (50) which brings the geometric centers of the concave mold (1) and the convex mold (2) into coincidence and then arranges them in opposition, and a tape winding device (60) which winds an adhesive tape onto the peripheral surfaces of the concave mold (1) and convex mold (2) so as to seal the gap between these molds, thereby to provide the lens-casting-mold assembling apparatus which can efficiently assemble a lens-casting-mold assembly, and which saves space. (Fig. 3)

## Description

### Technical Field

The present invention relates to a lens-casting-mold assembling apparatus which assembles a lens-casting-mold assembly for manufacturing an eyeglass lens by injection and curing in a state where an adhesive tape is wound onto the peripheral surfaces of a convex mold and a concave mold, a lens cleaning method which cleans the forming surfaces of the convex mold and the concave mold, and a lens-casting-mold assembling method which assembles the cleaned convex and concave molds.

### Technical Background

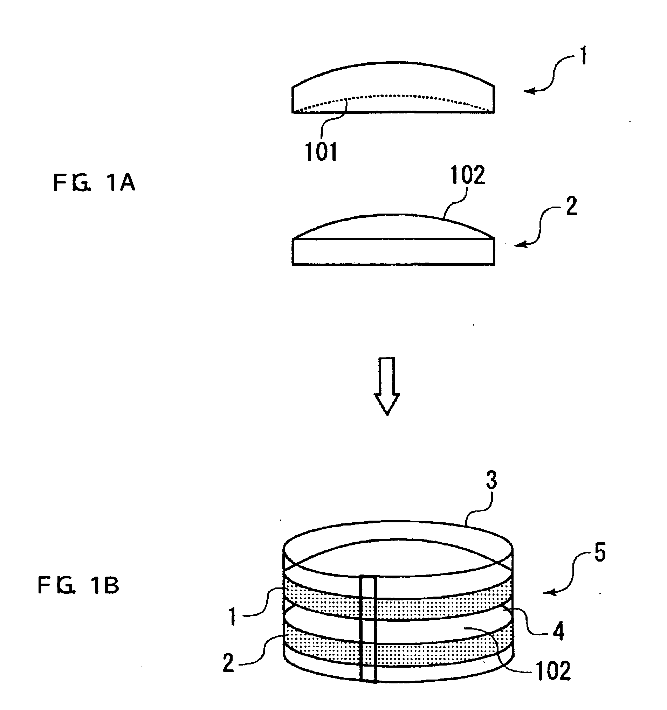

Heretofore, as a method for manufacturing a plastic lens, there has been known tape molding wherein, as shown in Fig. 1, a lens-casting-mold assembly 5 is assembled in such a way that two opposing molds, a concave mold 1 for forming a convex surface and a convex mold 2 for forming a concave surface, are arranged in opposition, and that an adhesive tape 3 is applied onto the peripheral surfaces of these molds, thereby to seal the gap between these molds. As indicated in JP-A-11-254459, the plastic lens is obtained by injecting the raw material of the lens into the inter-mold gap 4 of the assembled lens-casting-mold assembly 5 and curing it with the energy of heat, ultraviolet radiation or the like. Before the concave mold 1 and the convex mold 2 (hereinbelow, sometimes termed "lens-casting-molds" in combination) are assembled to fabricate the lens-casting-mold assembly 5, pollutions and foreign matters need to be eliminated by cleaning, at least, the forming surfaces of these molds. As indicated in Japanese Patent No. 3346585, a device for cleaning these molds, and a device for winding the adhesive tape onto the peripheral surfaces of the molds are automated. In the cleaning of the lens-casting-molds, however, the pollutions and foreign matters of the lens-casting-molds need to be completely eliminated because they adversely affect optical surfaces directly, and rapidity is required for the elimination. Besides, an organic solvent such as IPA has heretofore been used for drying subsequent to the cleaning, but the use of the organic solvent needs to make the cleaning device an explosion-proof type, and the device has become large in scale. In addition, the use of the organic solvent is unfavorable in point of environmental protection. Further, the cleaning device and assembling device for the lens-casting-molds are arranged in a clean room in order to prevent foreign matters from adhering to the lens-casting-molds. It is therefore required to make the installation area of these devices as small as possible. It is required that productivity be good in spite of the small installation area.

### Disclosure of the Invention

The present invention has been made in view of the above circumstances, and it has a first object to provide a lens-casting-mold assembling apparatus which can efficiently assemble a lens-casting-mold assembly, and which can make an installation area small to the utmost by uniting the cleaning of lens-casting-molds and the assemblage thereof.

A second object of the present invention is to provide a lens-casting-mold assembling apparatus which has a drying device that does not use any organic solvent. A third object of the present invention is to provide a lens-casting-mold cleaning method which can clean lens-casting-molds rapidly and without leaving pollutions behind. Besides, a fourth object of the present invention is to provide a lens-casting-mold cleaning method which does not use any organic solvent. A fifth object of the present invention is to provide a lens-casting-mold assembling method which assembles the lens-casting-molds cleaned by the lens-casting-mold cleaning method stated above.

In order to accomplish these objects, a lens-casting-mold assembling apparatus as defined in claim 1 is constructed by accommodating in one dust-proof room, a concave-mold first cleaning device in which, while a concave mold having a convex-surface forming surface for a lens is being rotated, the convex-surface forming surface is abraded by an elastic abrasion member with an abradant interposed therebetween; a concave-mold second cleaning device in which, while the concave mold is being rotated, the convex-surface forming surface is cleaned by an elastic abrasion member with water interposed therebetween; a concave-mold drying device in which, while the concave mold is being rotated, the convex-surface forming surface is dried by supplying a volatile liquid thereto; a convex-mold first cleaning device in which, while a convex mold having a concave-surface forming surface for the lens is being rotated, the concave-surface forming surface is abraded by an elastic abrasion member with an abradant interposed therebetween; a convex-mold second cleaning device in which, while the convex mold is being rotated, the concave-surface forming surface is cleaned by an elastic abrasion member with water interposed therebetween; a convex-mold drying device in which, while the convex mold is being rotated, the concave-surface forming surface is dried by supplying a volatile liquid thereto; an inversion device which inverts the concave mold or the convex mold up or down; a positioning device which brings geometric centers of the concave mold and the convex mold into coincidence, and which arranges the concave and convex molds in opposition with a predetermined distance spaced between the convex-surface forming surface and the concave-surface forming surface; and a tape winding device which winds an adhesive tape onto peripheral surfaces of the positioned concave and convex molds, thereby to seal a gap between these molds.

With the lens-casting-mold assembling apparatus, the forming surfaces of the molds can be rapidly cleaned with the abradant by the concave-mold and convex-mold first cleaning devices, the abradant on the abraded surfaces can be washed away with the water by the concave-mold and convex-mold second cleaning devices, and the cleaned surfaces can be dried by the concave-mold and convex-mold drying devices. A lens-casting-mold assembly can be assembled in such a way that the concave mold or the convex mold is inverted up or down by the inversion device, that the inverted concave and convex molds have their geometric centers brought into coincidence and are arranged in opposition by the positioning device, and that the adhesive tape is wound onto the peripheral surfaces of the concave and convex molds arranged in opposition, by the tape winding device. The lens-casting-mold assembling apparatus is capable of simultaneously cleaning the convex mold and the concave mold in a pair, and it can rapidly clean both the molds owing to the use of the abradant. In a case where the concave and convex molds in the pair are cleaned in a manner to simultaneously proceed, the forming surfaces of these molds are both located above. In order to confront the forming surfaces of these molds, either mold needs to be inverted up or down by the inversion device. Since the assembling device which consists of the inversion device, positioning device and tape winding device is directly connected to the cleaning devices of both the molds, the lens-casting-molds having been cleaned need not be stocked, also an installation area is very small, and the molds can be efficiently assembled. Moreover, since the devices are accommodated in the single dust-proof room, the clinging of dust in the course of conveyance, etc. does not occur, and an available percentage is enhanced.

A lens-casting-mold assembling apparatus as defined in claim 2 is constructed by accommodating in one dust-proof room a concave-mold first cleaning device in which, while a concave mold having a convex-surface forming surface for a lens is being rotated, the convex-surface forming surface is abraded by an elastic abrasion member with an abradant interposed therebetween; a concave-mold second cleaning/drying device in which, while the concave mold is being rotated, the convex-surface forming surface is cleaned by an elastic abrasion member with water interposed therebetween, and in which, while the concave mold is being rotated, the convex-surface forming surface is dried by supplying a volatile liquid thereto; a convex-mold first cleaning device in which, while a convex mold having a concave-surface forming surface for the lens is being rotated, the concave-surface forming surface is abraded by an elastic abrasion member with an abradant interposed therebetween; a convex-mold second cleaning/drying device in which, while the convex mold is being rotated, the concave-surface forming surface is cleaned by an elastic abrasion member with water interposed therebetween, and in which, while the convex mold is being rotated, the concave-surface forming surface is dried by supplying a volatile liquid thereto; an inversion device which inverts the concave mold or the convex mold up or down; a positioning device which brings geometric centers of the concave mold and the convex mold into coincidence, and which arranges the concave and convex molds in opposition with a predetermined distance spaced between the convex-surface forming surface and the concave-surface forming surface; and a tape winding device which winds an adhesive tape onto peripheral surfaces of the positioned concave and convex molds, thereby to seal a gap between these molds.

With the lens-casting-mold assembling apparatus, each of the convex-mold and concave-mold second cleaning/drying devices serves for both the cleaning and the drying, so that the two cleaning devices suffice for each of the concave and convex molds, and an installation area can be made still smaller.

A lens-casting-mold assembling apparatus as defined in claim 3 consists of the lens-casting-mold assembling apparatus as defined in claim 1 or 2, wherein the volatile liquid is warm water, and dry-air supply ports which supply dry air to said concave-mold drying device and said convex-mold drying device or to said concave-mold second cleaning/drying device and said convex-mold second cleaning/drying device are included. The warm water is employed as the volatile liquid, whereby the use of any organic solvent in the cleaning can be abolished. The reason why the warm water is employed unlike ordinary water, is to prevent the molds from being dewed on account of a temperature fall ascribable to vaporizing latent heat based on vaporization.

A lens-casting-mold assembling apparatus as defined in claim 4 consists of the lens-casting-mold assembling apparatus as defined in claim 3, wherein a cover member which covers surroundings of the concave mold or the convex mold is disposed, the dry-air supply port which supplies the dry air downwards is provided over the concave mold or the convex mold, and an exhaust port is provided below the concave mold or the convex mold. The dry air supplied downwards from the dry-air supply port passes along the upper surface of the concave mold or the convex mold, and it is exhausted from the exhaust port located below the mold. Since the flow of the dry air is in a vertical direction, an atmosphere around the concave mold or the convex mold can be efficiently replaced with the dry air, and rapid drying becomes possible.

A lens-casting-mold assembling apparatus as defined in claim 5 consists of the lens-casting-mold assembling apparatus as defined in any of claims 1 - 4, wherein said tape winding device includes a tape roll holding device which holds an adhesive tape roll of wound adhesive tape, a tape keep device which holds a distal end side of the adhesive tape drawn out from the adhesive tape roll, a tape drawing-out device which is constructed so as to draw out the adhesive tape from the adhesive tape roll by moving in a state where the distal end side of the adhesive tape is held by the tape keep device, and to move back to its original position when the adhesive tape is to be wound onto the peripheral surfaces of the concave mold and the convex mold, a cutting device which cuts the adhesive tape, a rotation drive device which simultaneously rotates the positioned concave and convex molds, and a press roller which is capable of abutting on and separating from the peripheral surfaces of the concave and convex molds. With the tape winding device, the tape drawing-out device moves so as to draw out the necessary adhesive tape before the adhesive tape is wound onto the peripheral surfaces of the concave and convex molds, the distal end side of the adhesive tape drawn out beforehand is stuck onto the peripheral surfaces of the concave and convex molds, and while the concave and convex molds are being simultaneously rotated by the rotation drive device, the adhesive tape is wound round and is pressed by the press roller, whereby the adhesive tape can be wound onto the peripheral surfaces of the concave and convex molds. As the winding proceeds, the adhesive tape drawing-out device moves so as to return to its original position, and the adhesive tape drawn out beforehand can be used for the winding. After the winding has ended, the adhesive tape is cut by the cutting device. The adhesive tape for use in the assemblage of the casting molds exhibits an intense adhesive force when it is drawn out from the adhesive tape roll. Therefore, in a case where the adhesive tape is directly drawn out from the adhesive tape roll and then stuck, it extends on account of the intense adhesive force, and it contracts after the sticking, to incur a dimensional insufficiency. In contrast, in the case where the part of the adhesive tape drawn out beforehand is stuck, the adhesive tape having extended is restored to its original dimension, and the adhesive tape which no longer contracts is stuck, so that the dimensional insufficiency does not occur.

A lens-casting-mold assembling apparatus as defined in claim 6 consists of the lens-casting-mold assembling apparatus as defined in claim 5, wherein said tape drawing-out device exerts a predetermined load on the adhesive tape in moving so as to return to its original position when the adhesive tape is to be wound onto the peripheral surfaces of the concave and convex molds. When the adhesive tape is to be stuck, the load is exerted on the adhesive tape, whereby winding wrinkles can be prevented from appearing.

A lens-casting-mold cleaning method for a lens as defined in claim 7 comprises the abrasion step of abrading with an abradant, at least a convex-surface forming surface or a concave-surface forming surface of a concave mold having the convex-surface forming surface of a lens or a convex mold having the concave-surface forming surface of the lens; the cleaning step of cleaning the part abraded at the abrasion step, with water; and the drying step of supplying a volatile liquid to the part cleaned at the cleaning step, and drying said part. According to such a lens-casting-mold cleaning method, the forming surface is cleaned with the abradant, so that pollutants can be eliminated rapidly and satisfactorily. Moreover, the forming surface is dried by supplying the volatile liquid thereto, so that water traces do not remain on the lens-casting-mold when water drops have been dried.

A lens-casting-mold cleaning method as defined in claim 8 consists in that the volatile liquid is warm water; and that water contents of the convex-surface forming surface and the concave-surface forming surface are vaporized by dry air at the concave-mold and convex-mold drying steps.

The warm water is employed as the volatile liquid, whereby the use of any organic solvent in the cleaning can be abolished.

A lens-casting-mold assembling method as defined in claim 9 comprises the positioning step of arranging in opposition, the convex-surface forming surface of the concave mold and the concave-surface forming surface of the convex mold as have been cleaned by the lens-casting-mold cleaning method as defined in claim 7 or 8, and the taping step of winding an adhesive tape onto peripheral surfaces of the concave and convex molds so as to seal a gap between these molds. Lens-casting-molds are assembled using the lens-casting-molds the pollutions of which have been satisfactorily eliminated by the cleaning step, whereby the occurrence of the defective units of the lens to be obtained can be suppressed.

A lens-casting-mold assembling method as defined in claim 10 consists in the lens-casting-mold assembling method as defined in claim 9, wherein said taping step draws out the adhesive tape from an adhesive tape roll of wound adhesive tape beforehand, and then winds the adhesive tape drawn out beforehand, onto the peripheral surfaces of the concave and convex molds. The part of the adhesive tape drawn out beforehand is stuck, whereby the adhesive tape which has extended is restored into an original state, and the adhesive tape which no longer contracts is stuck, so that a dimensional insufficiency is prevented from occurring.

### Industrial Applicability

The present invention provides a method and an apparatus for assembling eyeglass lens-casting-molds for manufacturing an eyeglass lens, and a method for cleaning lens-casting-molds, but it shall not be restricted to them.

### Brief Description of the Drawings

- Fig. 1(a): shows a concave mold and a convex mold for manufacturing a lens by injection and curing, and (b) a lens-casting-mold assembly in which the molds are assembled by an adhesive tape.
- Fig. 2(a): is a plan view showing the layout scheme of a lens-casting-mold assembling apparatus in a first embodiment, while (b) is a plan view showing the layout scheme of a lens-casting-mold assembling apparatus in a second embodiment.
- Fig. 3(a): -(c) are schematic constructional views showing the construction of the cleaning device of the lens-casting-mold assembling apparatus.
- Fig. 4(d): -(g) are constructional views showing the schematic construction of a positioning device in the assembling device of the lens-casting-mold assembling apparatus.
- Fig. 5: is a plan view showing the schematic construction of the tape winding device of the lens-casting-mold assembling apparatus.
- Fig. 6: is a constructional view showing the outline of a cleaning device which employs warm water.
- Fig. 7: is a constructional view showing the outline of the cleaning/drying device of the lens-casting-mold assembling apparatus in the second embodiment.

### Best Mode for Carrying Out the Invention

Now, embodiments of a lens-casting-mold assembling apparatus, a lens-casting-mold cleaning method and a lens-casting-mold assembling method according to the present invention will be described, but the present invention shall not be restricted to the embodiments described below. Fig. 1 is a schematic view showing a concave mold and a convex mold which constitute a lens-casting-mold assembly. The lens-casting-mold assembling apparatus of the present invention employs a concave mold 1 having a surface 101 for forming the convex surface of a lens, and a convex mold 2 having a surface 102 for forming the concave surface of the lens, in a pair as shown in Fig. 1(a). It is an apparatus in which, as shown in Fig. 1(b), a lens-casting-mold assembly 5 is assembled in such a way that the convex-surface forming surface 101 and concave-surface forming surface 102 of the respective lens-casting-molds 1, 2 are arranged in opposition with a predetermined distance spaced therebetween, and that an-adhesive tape 3 is wound onto the peripheral surfaces of the concave mold 1 and convex mold 2 a little more than one revolution, thereby to fix the molds 1, 2 and to seal the gap 4 between these lens-casting-molds 1, 2. The used adhesive tape 3 is wide to the extent of protruding from the peripheral surfaces of both the molds 1, 2 to one side or both sides thereof in the direction of the optic axis of the lens. The prescription data of a customer are transmitted from an optician, and the concave mold 1 and the convex mold 2 are selected on the basis of the prescription data and are supplied in the pair to the lens-casting-mold assembling apparatus.

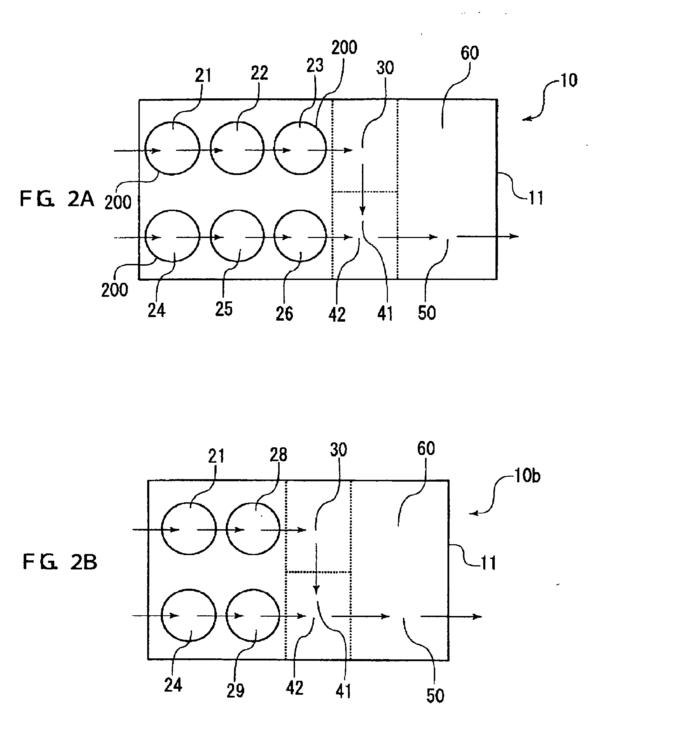

Fig. 2 is a plan view showing the layout of individual devices which constitute the lens-casting-mold assembling apparatus of the present invention. The lens-casting-mold assembling apparatus 10 of the first embodiment shown in Fig. 2(a) is an assembling apparatus accommodated in a dust-proof room 11 as is constructed of a cleaning device that is configured of a concave-mold first cleaning device 21, a concave-mold second cleaning device 22, a concave-mold drying device 23, a convex-mold first cleaning device 24, a convex-mold second cleaning device 25 and a convex-mold drying device 26; an inversion device 30; a centering device 41 for the concave mold and a centering device 42 for the convex mold; a positioning device 50 and a tape winding device 60. The concave-mold and convex-mold first cleaning devices 21, 24, the concave-mold and convex-mold second cleaning devices 22, 25 and the concave-mold and convex-mold drying devices 23, 26 are all isolated by cylindrical cover members 200. Besides, conveyance devices, not shown, for automatically conveying the lens-casting-molds from the devices to the next devices as indicated by arrows are installed.

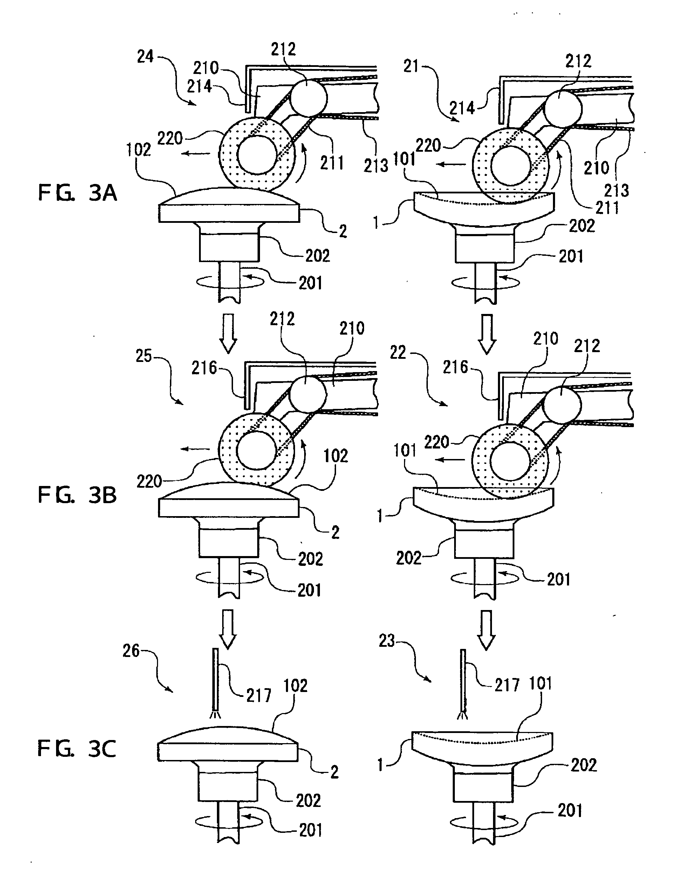

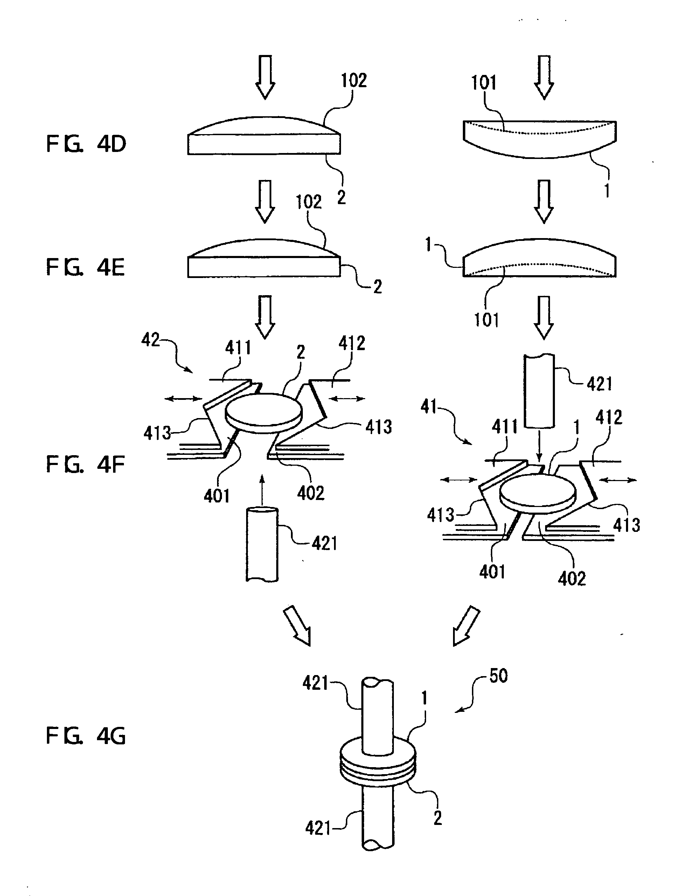

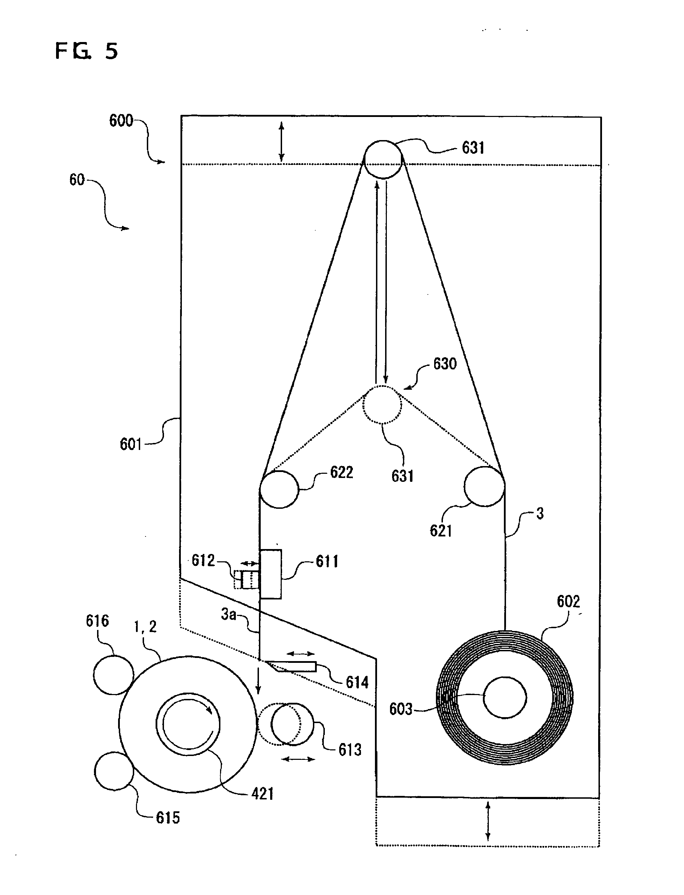

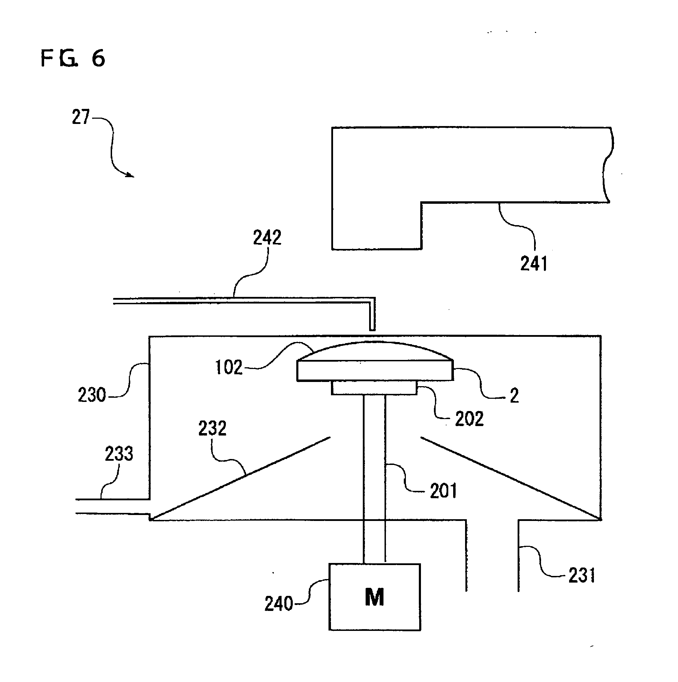

The constructions of the respective devices will be described with reference to Fig. 3 - Fig. 6. Fig. 3 is a side view showing the schematic construction of the cleaning device, Fig. 4 is a constructional view showing the schematic construction of the positioning device, Fig. 5 is a constructional view showing the schematic construction of the tape winding device, and Fig. 6 is a constructional view showing the outline of the drying device which employs warm water. As shown in Fig. 3(a), the concave-mold first cleaning device 21 and the convex-mold first cleaning device 24 have substantially the same constructions, each of which includes a suction chuck 202 for imbibing and fixing the lens-casting-mold 1 or 2 that is fixed to the upper end of a hollow rotary shaft 201 with its axis extending in a vertical direction. Besides, a roll-like elastic abrasion member 220 is rotatably supported at the distal end part of a movable arm 210 whose distal end part can be arranged on and spaced from the lens-casting-mold 1 or 2 that is fixed on the suction chuck 202, a pulley 212 which transmits a rotation driving force to the elastic abrasion member 220 through a belt 211 is rotatably arranged on the movable arm 210, and the pulley 212 is connected to the driving shaft of a motor, not shown, by a belt 213. The movable arm 210 presses the distal-end elastic abrasion member 220 against the lens-casting-mold 1 or 2 under a predetermined load, and it can move at a predetermined speed so as to traverse the upper surface of the lens-casting-mold 1 or 2. An abradant discharge port 214 which supplies slurry containing an abradant, onto the elastic abrasion member 220, is disposed over this elastic abrasion member 220 in a state where it is fixed to the movable arm 210. Urethane-based sponge for abrasion, for example, can be employed as the elastic abrasion member 220. Besides, usable as the abradant is one which is generally sold at a market for glass abrasion or for metal abrasion. It is possible to mention, for example, a metal oxide such as Al₂O₃, CeO₂, SiO₂, SiO, ZrO₂ or Cr₂O₃, or a carbide such as SiC, or C. CeO₂ can be preferably employed for the lens-casting-molds 1 and 2 made of glass. The grain size and shape of the abradant are determined at will, depending upon the material, shape and surface deposits of the lens-casting-mold to-be-abraded, or upon a desired surface roughness. The abradant is dispersed in water or the like solvent and is employed as the slurry, in order to diffuse the frictional heat between the elastic abrasion member 220 and the lens-casting-mold 1 or 2, and to enhance a shape conformability for the lens-casting-molds 1 and 2. The slurry containing the abradant may be absorbed by the elastic abrasion member 220, or may well be dropped to the lens-casting-mold 1 or 2. Besides, in a case where the elastic abrasion member 220 is formed of sponge made of PVA, urethane or PP, an elastic abrasion substance dispersed in forming the sponge may well be employed. In that case, the mold surface should preferably be abraded while water or the like solvent is being supplied to the sponge.

An abrading process which employs the cleaning devices shown in Fig. 3(a), proceeds in such a way that the surface of the concave mold 1 opposite to the convex-surface forming surface 101 thereof is imbibed and fixed to the suction chuck 202, while the surface of the convex mold 2 opposite to the concave-surface forming surface 102 thereof is imbibed and fixed to the suction chuck 202, and that each of the suction chucks 220 is rotated at 500 - 1000 r.p.m. Each of the elastic abrasion members 220 is rotated at 30 - 500 r.p.m. under a predetermined load, the elastic abrasion member 220 is moved so as to traverse the lens-casting-mold 1 or 2, and the slurry containing the abradant is dropped from the abradant discharge port 214 onto the elastic abrasion member 220 meantime. Thus, while the lens-casting-molds 1 and 2 are being rotated, the convex-surface forming surface 101 and the concave-surface forming surface 102 are abraded by the rotating elastic abrasion members 220, with the abradant interposed therebetween, whereby pollutions depositing on the forming surfaces 101 and 102 can be scraped off.

The concave-mold second cleaning device 22 and convex-mold second cleaning device 25 as shown in Fig. 3(b) have substantially the same constructions as those of the first cleaning devices 21 and 24 shown in Fig. 3(a). It is different is that, instead of the slurry containing the abradant, water is supplied from water supply pipes 216 onto elastic abrasion members 220. Therefore, identical reference numerals are assigned to the same members, which shall be omitted from description. Used as the elastic abrasion members 220 are ones which do not contain any abradant. A cleaning process is similar to one based on the first cleaning devices, and while the lens-casting-molds 1 and 2 are being rotated, the convex-surface forming surface 101 and the concave-surface forming surface 102 are cleaned by the rotating elastic abrasion members 220, with water interposed therebetween, whereby the abradant is washed away. Each of the concave-mold drying device 23 and convex-mold drying device 26 as shown in Fig. 3(c) includes a suction chuck 202 which imbibes and fixes the lens-casting-mold that is fixed to the upper end of a hollow rotary shaft 201 with its axis extending in the vertical direction. Besides, a liquid supply pipe 217 which drops a volatile liquid is disposed over the lens-casting-mold 1 or 2 which is fixed on the suction chuck 202. As the volatile liquid, it is possible to employ isopropyl alcohol (IPA) or the like organic solvent having heretofore been used, or warm water. Fig. 3(c) shows the drying devices 23 and 26 in the case of employing the organic solvent. A drying process proceeds in such a way that the lens-casting-molds 1 and 2 are imbibed and fixed to the suction chucks 202, and that, the suction chucks are being rotated at 50 - 300 r.p.m., the organic solvent is dropped from the liquid supply pipes 217 to the upper surfaces 101 and 102 of the respective lens-casting-molds 1 and 2 to the amount of, for example, 2 - 3 ml. The dropped organic solvent is centrifugally spread, and it mixes with water on the surfaces to form uniform films and to vaporized, whereby the surfaces of the lens-casting-molds can be dried. Such a drying method employing the organic solvent is adopted for the reason that, when defects such as water traces or stains remain on the surface of the lens-casting-mold 1 or 2 in the cleaning process, serious quality problems are incurred in later processes.

Fig. 6 is a schematic constructional view showing an embodiment of a drying device in the case of employing warm water as the volatile liquid. The drying device 27 in Fig. 6 is such that a suction chuck 202 which is disposed at the upper end of a hollow rotary shaft 201 with its axis extending in a vertical direction is installed in a bottomed cylindrical cover member 230, and that the rotary shaft 201 is interlocked with a rotating motor 240 under the cover member 230. Disposed over the cover member 230 are a dry-air supply port 241 which blows dry air downwards, and a warm-water supply nozzle 242 which drops the warm water onto the lens-casting-mold 2 fixed to the suction chuck 202. An exhaust port 231 is provided in the bottom surface of the cover member 230. A conical partition plate 232 for separating liquid drops, whose upper part has a clearance from the rotary shaft 201 is truncated, is disposed in the cover member 230, and it receives the liquid drops falling from the lens-casting-mold 2 and drains them from a drain port 233. The dry air supplied from the dry-air supply port 241 passes through the clearance between the rotary shaft 201 and the partition plate 232, and it is exhausted from the exhaust port 231. A drying process which employs the drying device 27, proceeds in such a way that the convex mold 2 is imbibed and held by the suction chuck 202, and that, while the convex mold 2 is being rotated at predetermined revolutions per minute, the warm water is dropped from the warm-water supply nozzle 242 to the surface of the convex mold 2. The dropped warm water is centrifugally spread to form a thin film on the concave-surface forming surface 102 of the convex mold 2. Subsequently, while the convex mold 2 is being rotated, the dry air is blown from the dry-air supply port 241 against the surface of the convex mold 2, thereby to vaporize the film of the warm water on the concave-surface forming surface 102 of the convex mold 2 and to dry the convex mold 2. Although the convex mold 2 is employed as lens-casting-mold in the description here, quite the same holds true of the concave mold 1. The use of the warm water unlike water at a normal temperature is for facilitating the vaporization of the surface water of the lens-casting-molds 1 and 2, and for preventing temperature fall ascribable to the latent heat of the vaporization. The rotational speed of each of the casting molds may be 50 - 300 r.p.m., preferably 100 - 200 r.p.m., the temperature of the water may be 30 - 100 °C, preferably 50 - 70 °C, and the discharge quantity of the water may be 2 - 200 ml, preferably 10 - 100 ml in a case where the surface area of the casting mold is 20 - 100 cm². These conditions can be determined in consideration of the surface area, specific heat and thermal deformation temperature of the lens-casting-mold, the quality and quantity of the dry air, the extent of the replacement of an atmosphere, the necessary temperature of the casting mold at a later process, and so forth. Another purpose of discharging the water is to wash away the pollutions of the abradant, chemicals etc. which each of the lens-casting-molds 1 and 2 has brought in from the preceding process. Accordingly, the quality of the water to be supplied needs to be held constant in accordance with the degree of cleanness of the surface as is required in the process subsequent to draining and drying, and pure water is used if necessary. Besides, the discharge of the water is carried out while being rotated, in order to uniformly clean the casting molds. It need not always be in the state of flowing water, but it may well be, for example, in an atomized state or water vapor state, or it may well be accompanied with an ultrasonic wave. The atmosphere of the front surface of the casting mold is replaced with the dry air while this casting mold is being rotated, is for the purpose of drying also the peripheral surface of the casting mold after drying the front surface. The rotational speed of the forming mold in this case may be 200 - 3000 r.p.m., preferably 800 - 2000 r.p.m., the absolute humidity of the dry air to be supplied may be at most 10 g/kg, preferably at most 5 g/kg, and an airflow is desired to be at least 0.5 m³/min, preferably at least 1.0 m³/min. In order to enhance the replacement efficiency of the atmosphere, the exhaust port 231 should preferably be provided on a side opposite to the dry-air supply port 241 so as to hold the lens-casting-mold 2 therebetween. Thus, the dry air blown downwards from the dry-air supply port 241 flows substantially in the vertical direction until it is exhausted from the exhaust port 231. In a case where the exhaust port does not exist on the opposite side to the dry-air supply port 241 with the lens-castingmold 1 or 2 held therebetween, humidity around the front surface of the lens-casting-mold 1 or 2 heightens to hinder the drying. Since the front surface of the lens-casting-mold 1 or 2 is cooled by the latent heat of vaporization during the supply of the dry air, the front surface of the casting mold as dried once is sometimes dewed again without providing the exhaust port, and hence, the dry air must be kept supplied till the replacement of the atmosphere. Incidentally, it is also possible to heat the dry air. In a case where no limitation is imposed on the necessary temperature of each lens-casting-mold in the later process, the temperature of the warm water is set high, and the discharge quantity thereof large, whereby the absolute humidity of the dry air can be made high, and the airflow thereof small. To the contrary, in a case where the necessary temperature of the lens-casting-mold in the later process is made near a room temperature, the temperature of the warm water needs to be set low, and the discharge quantity thereof small, whereby the absolute humidity of the dry air is made low, and the airflow thereof large. The dry air to be supplied may be one which is obtained by a general dehumidifier such as of a cooling type based on a coolant or an adsorption type based on silica gel or the like, and compressed air may well be used on condition that scattering is prevented during the draining. The dry air may well be kept supplied also when the warm water is dropped.

Next, the positioning device for the lens-casting-molds will be described with reference to Fig. 4. The concave mold 1 cleaned by the cleaning devices 21, 22 and 23 has have the upper, convex-surface forming surface 101 cleaned, whereas the other convex mold 2 has have the upper, concave-surface forming surface 102 cleaned. Therefore, one of the casting molds needs to be inverted for confronting the convex-surface forming surface 101 and the concave-surface forming surface 102. In the apparatus of this embodiment, the concave mold 1 is conveyed into the inversion device 30 by the conveyance device, not shown, and as shown in Fig. 4(e), the chuck of the conveyance device, not shown, for imbibing and holding the concave mold 1 by way of example is turned 180 degrees about an axis extending in a horizontal direction. Thus, the concave mold 1 is arranged with the convex-surface forming surface 101 located on a lower side. Subsequently, as shown in Fig. 4(f), the geometric centers of the lens-casting-molds 1 and 2 are brought into coincidence by the centering devices. These centering devices are separate as the centering device 41 for the concave mold, and the centering device 42 for the convex mold. Each of the centering devices 41 and 42 includes two opposing horizontal beds 401 and 402 which are arranged with an interspace therebetween, and it is furnished with two flat centering members 411 and 412 which are slidable on the upper surfaces of the respective horizontal beds 401 and 402 so as to be capable of coming away from and near to each other. V-shaped notches 413 are provided in the opposing end faces of the centering members 411 and 412. The interspace between the horizontal beds 401 and 402 of the convex-mold centering device 42 has such a distance that a suction holder 421 can pass therethough. The concave mold 1 and the convex mold 2 are respectively put on the horizontal beds 401 and 402, whereby they are positioned in an exact horizontal direction. The centering members 411 and 412 on both sides are brought near toward the corresponding one of the concave mold 1 and convex mold 2 put on the horizontal beds 401 and 402, and the peripheral surface of the corresponding one of the concave mold 1 and convex mold 2 is nipped between the V-shaped notches 413 from both the sides, whereby the geometric centers of the concave mold 1 and convex mold 2 are exactly arranged at a predetermined position at the nipped positions. In this state, the axes of the molds are arranged at the position of the geometric centers, and the center of the upper surface of the concave mold 1 and that of the lower surface of the convex mold 2 are respectively imbibed and held by suction holders 421 each of which moves up and down along the position of the geometric centers. The suction surfaces of the suction holders 421 can also hold the convex mold 2 and the concave mold 1 exactly in the horizontal direction.

As shown in Fig. 4(g), the concave mold 1 and the convex mold 2 are conveyed to the positioning device 50 in the state where they are held by the suction holders 421, and they are arranged so that the geometric centers of the concave mold 1 and convex mold 2 may coincide. The positioning device 50 constructs part of the tape winding device 60. A positioning process based on the positioning device 50 proceeds in such a way that the concave mold 1 located above and the convex mold 2 located below are opposed to each other with a somewhat large spacing held therebetween, and that the axes of the upper and lower suction holders 421 are arranged so as to coincide. Besides, the heights of the respective reference positions of the concave mold 1 and convex mold 2 are detected by a detection device, not shown, and the spacing between the concave mold 1 and convex mold 2 is calculated. The movement distances of the concave mold 1 and convex mold 2 in the vertical direction are calculated on the basis of the calculated spacing, and the suction holders 421 are moved in the vertical direction so as to hold the concave mold 1 and convex mold 2 at a predetermined spacing and are fixed at positions corresponding to the predetermined spacing.

Next, the tape winding device will be described with reference to Fig. 5. Fig. 5 is a plan view showing the schematic construction of the tape winding device. The tape winding device 60 includes a rotation drive device, not shown, which rotates the suction holders 421 at an identical rotational speed in an identical direction at the same time, the suction holders 421 imbibing and holding the concave and convex molds 1 and 2 positioned by the positioning device 50 (in the plan view of Fig. 5, the convex mold 2 is hidden by the concave mold 1 and is not shown, but the concave and convex molds 1 and 2 will be referred to in the description), respectively. Besides, the tape winding device 60 is furnished with a tape drawing-out unit 600 which advances and retreats so as to come away from and near to the concave and convex molds 1 and 2 at a movement distance of, for example, about 10 cm. The tape drawing-out unit 600 is such that, on a unit board 601, for example, a metal plate, there are disposed a tape roll holding device 603 which rotatably holds an adhesive tape roll 602 with the adhesive tape 3 wound, and which is arranged near the concave and convex molds 1 and 2; a tape keep-and-guide device 611 which guides and holds the distal end side 3a of the adhesive tape 3 drawn out from the adhesive tape roll 602; a tape keep device 612 which advances and retreats so as to be capable of abutting against and separating from the tape keep-and-guide device 611; a first tape guide roller 621 and a second tape guide roller 622 which are fixedly arranged between the adhesive tape roll 602 and the tape keep device 611, and which guide the adhesive tape 3 drawn out from the adhesive tape roll 602; and a tape drawing-out device 630 which is arranged between the tape guide rollers 621 and 622, and which includes a movable, tape drawing-out roller 631 that is rectilinearly driven by, for example, an air cylinder not shown, so as to come away from and near to the tape roll holding device 603. As a pre-operation for winding the adhesive tape 3 round the concave and convex molds 1 and 2, the tape drawing-out device 630 moves the tape drawing-out roller 631 from a position indicated by a broken line, to a position indicated by a solid line, thereby to bring this roller away from the tape roll holding device 603. Besides, the tape drawing-out device 630 affords a resistance and exerts a tension on the adhesive tape 3 by a braking mechanism not shown, in a case where the tape drawing-out roller 631 moves back from the position indicated by the solid line, to the original position indicated by the broken line, in order to wind the adhesive tape 3 onto the peripheral surfaces of the concave and convex molds 1 and 2. A plurality of such tape drawing-out units 600 are stacked and arranged in the vertical direction, whereby when the adhesive tape of the adhesive tape roll 602 has been consumed, the new adhesive tape roll 602 can be supplied through successive exchange. Besides, the tape winding device 60 further includes a press roller 613 which advances and retreats so as to abut against and separate from the peripheral surfaces of the concave and convex molds 1 and 2, a cutting device 614 which cuts the adhesive tape located between the tape keep-and-guide device 611 and the press roller 613, and two guide rollers 615 and 616 which are in abutment on the peripheral surfaces of the concave and convex molds 1 and 2.

There will be described a taping process which is the operation of the tape winding device 60. As shown in Fig. 5, the adhesive tape 3 drawn out from the adhesive tape roll 602 after the end of the last winding is extended over the first tape guide roller 621, tape drawing-out roller 631 and second adhesive-tape guide roller 622 with the base material tape side of the adhesive tape 3 lying in touch therewith, it is guided to the tape keep-and-guide device 611, and its distal end 3a cut by the cutting device 614 is near the cutting device 614. On this occasion, the tape drawing-out roller 631 lies at the remotest position from the tape roll holding device 603 as indicated by the solid line, and it is in a state where it has drawn out the adhesive tape 3. Besides, the tape keep device 612 lies at a position at which it abuts against the tape keep-and-guide device 611 as indicated by a solid line, and the devices 611 and 612 fix the adhesive tape 3 therebetween. The tape drawing-out unit 600 has retreated to a position remote from the press roller 613. The press roller 613 lies at a position at which it separates from the concave and convex molds 1 and 2 as indicated by a solid line. From the state of the solid-line arrangement of the individual devices as shown in Fig. 5, first of all, the tape drawing-out unit 600 advances to a position indicated by a broken line, so as to come near to the press roller 613, so that the distal end of the adhesive tape 3 drawn out is arranged on a line which connects the axis of the press roller 613 and the common axis of the concave and convex molds 1 and 2. Subsequently, the press roller 613 advances to a position indicated by a broken line, so as to abut against the concave and convex molds 1 and 2, thereby to press the concave and convex molds 1 and 2 and to bring the distal end of the adhesive tape 3 into close touch with the concave and convex molds 1 and 2. Subsequently, the tape keep device 612 retreats to a position indicated by a broken line, so as to separate from the tape keep-and-guide device 611, thereby to release the keep of the adhesive tape 3. In addition, the rotation drive device not shown, simultaneously rotates the respective suction holders 421 imbibing and holding the concave and convex molds 1 and 2, thereby to wind the adhesive tape 3 onto the peripheral surfaces of the concave and convex molds 1 and 2. On this occasion, the adhesive tape 3 is held in pressed touch with the concave and convex molds 1 and 2 by the two guide rollers 615 and 616. With the rotations of the suction holders 421, the tape drawing-out roller 631 returns to the position indicated by the broken line, while undergoing a force in a direction opposite to its moving direction under a predetermined load owing to the braking mechanism. In this way, the adhesive tape 3 drawn out is wound round the concave and convex molds 1 and 2, and the adhesive tape 3 is prevented from being drawn out from the adhesive tape roll 602. The appropriate load is exerted on the adhesive tape 3 by the braking mechanism, whereby the adhesive tape 3 is tensioned, and winding wrinkles can be prevented from appearing when the adhesive tape 3 is wound onto the peripheral surfaces of the concave and convex molds 1 and 2. The appearance of the winding wrinkles can be suppressed to several percent by setting the load on the adhesive tape 3 at or above 10 gf/(tape width of 10 mm or more), and preferably, the appearance of the winding wrinkles can be suppressed to zero by exerting a load of at least 100 gf/(tape width of 10 mm or more). After the adhesive tape 3 has been wound, the tape drawing-out unit 600 retreats to return to the position indicated by the solid line. On this occasion, the distal end of the adhesive tape 3 has been wound round the concave and convex molds 1 and 2, so that the adhesive tape 3 is drawn out from the adhesive tape roll 602 in correspondence with the retreat distance of the tape drawing-out unit 600. Subsequently, the tape keep device 612 advances to abut against the tape keep-and-guide device 611 as indicated by the solid line, and the tape keep device 612 and the tape keep-and-guide device 611 fix the adhesive tape 3 therebetween. Besides, the cutting device 614 advances to cut the adhesive tape 3, whereupon it retreats. With the distal end part 3a of the adhesive tape 3 held and fixed between the tape keep device 612 and the tape keep-and-guide device 611, the tape drawing-out roller 631 of the tape drawing-out device 630 moves from the position indicated by the broken line, to the position which is the remotest from the tape roll holding device 603 as indicated by the solid line. Owing to the movement of the tape drawing-out roller 631, the adhesive tape 3 is drawn out from the adhesive tape roll 602 a predetermined length, whereby the adhesive tape 3 is drawn out a length which is greater than a length to be wound round the concave and convex molds 1 and 2, when the length of the adhesive tape 3 drawn out by the retreat of the tape drawing-out unit 600 is added to the predetermined length. After the adhesive tape 3 has been cut, the press roller 613 retreats to the position of the solid line and separates from the concave and convex molds 1 and 2. Incidentally, although the terminal end of the adhesive tape 3 cut by the cutting device 614 is apart from the concave and convex molds 1 and 2, the free terminal part is formed with a folded-back part in such a way that the parts of the adhesive layer of the adhesive tape 3 are caused to adhere to each other by a folding-back device not shown. Owing to the series of operations, the adhesive tape 3 is adhesively wound onto the peripheral surfaces of the two opposing molds, the concave mold 1 and the convex mold 2, whereby the predetermined lens-casting-mold assembly 5 is assembled, and the taping process is ended. Incidentally, although the example employing the air cylinder as the mechanism for driving the adhesive-tape drawing-out device 630 has been mentioned, no obstacle is formed even with another mechanism such as a motor. In this manner, in the lens-casting-mold assembling apparatus 10 of this embodiment, the tape drawing-out device 630 is disposed, so as to draw out the adhesive tape 3 from the adhesive tape roll 602 in excess of the length required for winding the tape onto the peripheral surfaces of the concave and convex molds 1 and 2, and the part of the adhesive tape 3 drawn out beforehand is used in winding the adhesive tape 3 onto the peripheral surfaces of the concave and convex molds 1 and 2. The adhesive layer of the adhesive tape 3 for use in the assemblage of the casting molds exhibits an intense adhesive force when the tape is drawn out from the adhesive tape roll 602. As a result, in a case where the adhesive tape is directly drawn out from the adhesive tape roll 602 and then stuck, it extends on account of the intense adhesive force, and it contracts after the sticking, to incur a dimensional insufficiency. In contrast, in the case where the part of the adhesive tape drawn out beforehand is stuck, the adhesive tape having extended is restored to its original dimension, and the adhesive tape which no longer contracts is stuck, so that the dimensional insufficiency does not occur. The lens-casting-mold assembling apparatus 10 of this embodiment is such that the cleaning device which can simultaneously clean both the concave mold 1 and the convex mold 2, and the assembling device which assembles the concave mold 1 and the convex mold 2 are accommodated in the single dust-proof room 11. Accordingly, after both the concave mold 1 and the convex mold 2 in the pair have been simultaneously cleaned, the cleaned concave mold 1 and convex mold 2 can be assembled into the lens-casting-mold assembly 5 immediately without being stocked. Therefore, the lens-casting-mold assembly 5 can be efficiently assembled, and the occurrence of defective units in which dust has clung to the lens-casting-mold 1 or 2 can be suppressed to the utmost. Moreover, since the abrasion devices 21 and 24 are incorporated in the cleaning device, a time period for cleaning the casting molds is short, and pollutants are washed away very favorably, so that the occurrence of defective units ascribable to the pollutions of the casting molds can be suppressed. Furthermore, since the cleaning device and the assembling device are united, the apparatus becomes compact and saves space. Besides, since the drying device 27 employing the warm water is adopted, the apparatus need not be made the explosion-proof type which inevitably becomes large in scale, and hence, it can be made low in cost.

Next, there will be described a lens-casting-mold assembling apparatus in a second embodiment as shown in Fig. 2(b). The lens-casting-mold assembling apparatus 10b consists in that second cleaning/drying devices 28, 29 serve as both the second cleaning devices 22, 25 and drying devices 23, 26 of the lens-casting-mold assembling apparatus 10 in the first embodiment. Therefore, a cleaning device suffices with the two sorts of devices, the abrasion devices 21, 24 and the succeeding cleaning/drying devices 28, 29, so that the apparatus saves space still further. Since the portions except the second cleaning/drying devices 28, 29 are the same as in the first embodiment, only the second cleaning/drying devices 28, 29 will be described.

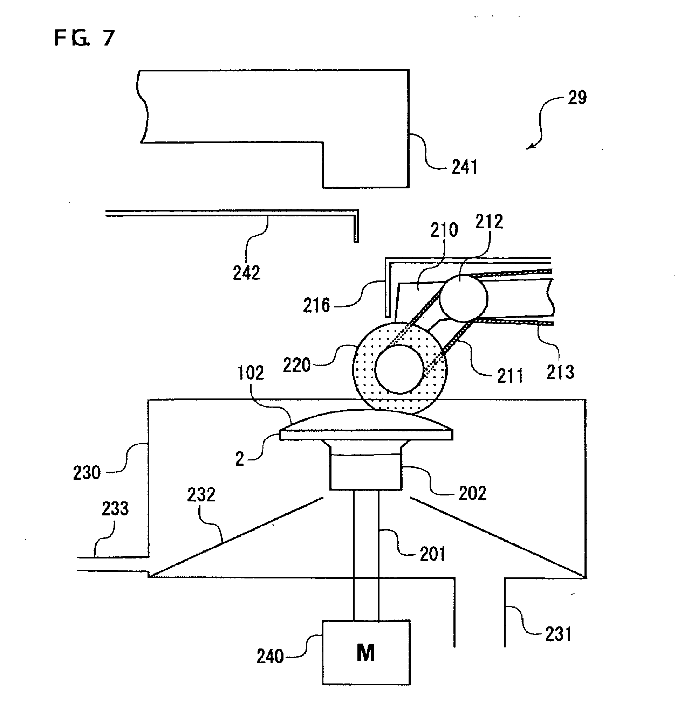

Fig. 7 is a schematic constructional view showing one embodiment of the second cleaning/drying device 29 for the convex mold. The second cleaning/drying device 29 is such that a bottomed cylindrical cover member 230 is included, that a suction chuck 202 is fixed to the upper end of a hollow rotary shaft 201 whose axis extends in a vertical direction, and which is driven to rotate by a motor 240 arranged under the cover member 230, and that the suction chuck 202 is arranged in the cover member 230. The interior of the cover member 230 is partitioned by a conical partition plate 232 whose top part covering the rotary shaft 201 is truncated. An exhaust port 231 is provided in the bottom surface of the cover member 230, and air having passed through the clearance between the partition plate 232 and the rotary shaft 201 can be exhausted from the exhaust port 231. Besides, a solution having flowed down on the partition plate 232 is drained from a drain port 233. A roll-like elastic abrasion member 220 is rotatably supported at the distal end part of a movable arm 210 whose distal end part can be arranged on and spaced from the convex mold 2 that is imbibed and fixed on the suction chuck 202, a pulley 212 which transmits a rotation driving force to the elastic abrasion member 220 through a belt 211 is rotatably arranged on the movable arm 210, and the pulley 212 is connected to the driving shaft of a motor, not shown, by a belt 213. The movable arm 210 presses the distal-end elastic abrasion member 220 against the lens-castingmold 2 under a predetermined load, and it can move at a predetermined speed so as to traverse the upper surface of the lens-casting-mold 2. A water discharge port 216 which supplies water onto the elastic abrasion member 220, is disposed over this elastic abrasion member 220 in a state where it is fixed to the movable arm 210. Besides, disposed over the cover member 230 are a dry-air supply port 241 which blows dry air downwards, and a warm-water supply nozzle 242 which drops warm water onto the casting mold 2 imbibed and fixed to the suction chuck 202. The operation of the cleaning/drying process of such a second cleaning/drying device 29 will be described. First, the concave-surface forming surface 102 to-be-cleaned of the convex mold 2 is located above, and the lower surface of this mold is imbibed and held by the suction chuck 202. Subsequently, while the convex mold 2 is being rotated at a predetermined rotational speed by driving the motor 240, the elastic abrasion member 220 is rotated at a predetermined rotational speed, and the water is supplied from the water discharge port 216 to the elastic abrasion member 220. While the elastic abrasion member 220 is being moved, the whole upper surface of the convex mold 2 is rubbed and cleaned. Water shaken off from the convex mold 2 is received by the partition plate 232, and is drained from the drain port 233. After the end of the cleaning, the elastic abrasion member 220 is brought and kept away from the convex mold 2. While the convex mold 2 is being rotated, the warm water is dropped from the warm-water supply nozzle 242 onto the upper surface of the convex mold 2 so as to spread on the upper surface of the convex mold 2, and surplus warm water is shaken off by the rotation. After the dropping of the warm water, the dry air is blown from the dry-air supply port 241 against the upper surface of the convex mold 2, thereby to vaporize and dry the thin film of the warm water. The dry air is exhausted from the exhaust port 231 of the cover member 230. In this manner, each of the second cleaning/drying devices 28 and 29 can perform the cleaning and the drying through successive changeover, and the cleaning and the drying can therefore be carried out by the single device, so that the lens-casting-mold assembling apparatus can be reduced in size into a space-saving apparatus.

The lens-casting-mold assembling apparatus of the present invention unites a cleaning device which can simultaneously clean a concave mold and a convex mold in a pair, and an assembling device which assembles these molds, so that in spite of saving space, it can efficiently assemble a lens-casting-mold assembly, and it can suppress to the utmost the occurrence of defective units in which dust has clung to the lens-casting-mold. Moreover, since abrasion devices are incorporated in a cleaning device, a time period for cleaning the casting molds is short, so that the cleaning is efficient, and pollutants are washed away very favorably, so that the occurrence of defective units ascribable to the pollutions of the casting molds can be suppressed. Since the lens-casting-mold assembling apparatus of the present invention adopts a drying device employing warm water, it need not be made an explosion-proof type, and it can be made a simple apparatus. Since the lens-casting-mold cleaning method of the present invention consists in a cleaning method employing an abradant, a cleaning time is short, so that cleaning is efficient, and the pollutants of casting molds are favorably washed away, so that the occurrence of defective units ascribable to the pollutants of the casting molds can be suppressed. Since the lens-casting-mold cleaning method of the present invention consists in a drying method employing warm water, it can be made a simple cleaning method by abolishing the use of any organic solvent. The lens-casting-mold assembling method of the present invention can suppress the occurrence of the defective units of lenses to-be-obtained in such a way that lens-casting-molds are assembled using the lens-casting-molds whose pollutions have been satisfactorily eliminated by the lens-casting-mold cleaning method stated above. The lens- casting -mold assembling method of the present invention sticks the part of an adhesive tape drawn out beforehand, whereby the adhesive tape having extended is restored to its original state, and the adhesive tape which no longer contracts is stuck, so that a dimensional insufficiency is prevented from occurring.

## Claims

1. A lens-casting-mold assembling apparatus **characterized by** accommodating in one dust-proof room:
a concave-mold first cleaning device in which, while a concave mold having a convex-surface forming surface for a lens is being rotated, the convex-surface forming surface is abraded by an elastic abrasion member with an abradant interposed therebetween;
a concave-mold second cleaning device in which, while the concave mold is being rotated, the convex-surface forming surface is cleaned by an elastic abrasion member with water interposed therebetween;
a concave-mold drying device in which, while the concave mold is being rotated, the convex-surface forming surface is dried by supplying a volatile liquid thereto;
a convex-mold first cleaning device in which, while a convex mold having a concave-surface forming surface for the lens is being rotated, the concave-surface forming surface is abraded by an elastic abrasion member with an abradant interposed therebetween;
a convex-mold second cleaning device in which, while the convex mold is being rotated, the concave-surface forming surface is cleaned by an elastic abrasion member with water interposed therebetween;
a convex-mold drying device in which, while the convex mold is being rotated, the concave-surface forming surface is dried by supplying a volatile liquid thereto;
an inversion device which inverts the concave mold or the convex mold up or down;
a positioning device which brings geometric centers of the concave mold and the convex mold into coincidence, and which arranges the concave and convex molds in opposition with a predetermined distance spaced between the convex-surface forming surface and the concave-surface forming surface; and
a tape winding device which winds an adhesive tape onto peripheral surfaces of the positioned concave and convex molds, thereby to seal a gap between these molds.

2. A lens-casting-mold assembling apparatus **characterized by** accommodating in one dust-proof room:
a concave-mold first cleaning device in which, while a concave mold having a convex-surface forming surface for a lens is being rotated, the convex-surface forming surface is abraded by an elastic abrasion member with an abradant interposed therebetween;
a concave-mold second cleaning/drying device in which, while the concave mold is being rotated, the convex-surface forming surface is cleaned by an elastic abrasion member with water interposed therebetween, and in which, while the concave mold is being rotated, the convex-surface forming surface is dried by supplying a volatile liquid thereto;
a convex-mold first cleaning device in which, while a convex mold having a concave-surface forming surface for the lens is being rotated, the concave-surface forming surface is abraded by an elastic abrasion member with an abradant interposed therebetween;
a convex-mold second cleaning/drying device in which, while the convex mold is being rotated, the concave-surface forming surface is cleaned by an elastic abrasion member with water interposed therebetween, and in which, while the convex mold is being rotated, the concave-surface forming surface is dried by supplying a volatile liquid thereto;
an inversion device which inverts the concave mold or the convex mold up or down;
a positioning device which brings geometric centers of the concave mold and the convex mold into coincidence, and which arranges the concave and convex molds in opposition with a predetermined distance spaced between the convex-surface forming surface and the concave-surface forming surface; and
a tape winding device which winds an adhesive tape onto peripheral surfaces of the positioned concave and convex molds, thereby to seal a gap between these molds.

3. A lens-casting-mold assembling apparatus as defined in claim 1 or 2, **characterized in that**:
the volatile liquid is warm water, and that dry-air supply ports which supply dry air to said concave-mold drying device and said convex-mold drying device or to said concave-mold second cleaning/drying device and said convex-mold second cleaning/drying device are included.

4. A lens-casting-mold assembling apparatus as defined in claim 3, **characterized in that**:
a cover member which covers surroundings of the concave mold or the convex mold is disposed, that the dry-air supply port which supplies the dry air downwards is provided over the concave mold or the convex mold, and that an exhaust port is provided below the concave mold or the convex mold.

5. A lens-casting-mold assembling apparatus as defined in any of claims 1 - 4,
**characterized in that**:
said tape winding device includes a tape roll holding device which holds an adhesive tape roll of wound adhesive tape, a tape keep device which holds a distal end side of the adhesive tape drawn out from the adhesive tape roll, a tape drawing-out device which is constructed so as to draw out the adhesive tape from the adhesive tape roll by moving in a state where the distal end side of the adhesive tape is held by the tape keep device, and to move back to its original position when the adhesive tape is to be wound onto the peripheral surfaces of the concave mold and the convex mold, a cutting device which cuts the adhesive tape, a rotation drive device which simultaneously rotates the positioned concave and convex molds, and a press roller which is capable of abutting on and separating from the peripheral surfaces of the concave and convex molds.

6. A lens-casting-mold assembling apparatus as defined in claim 5, **characterized in that**:
said tape drawing-out device exerts a predetermined load on the adhesive tape in moving so as to return to its original position when the adhesive tape is to be wound onto the peripheral surfaces of the concave and convex molds.

7. A lens-casting-mold cleaning method **characterized by** comprising:
an abrasion step of abrading with an abradant, at least a convex-surface forming surface or a concave-surface forming surface of a concave mold having the convex-surface forming surface of a lens or a convex mold having the concave-surface forming surface of the lens;
a cleaning step of cleaning the part abraded in the abrasion step, with water; and
a drying step of supplying a volatile liquid to the part cleaned in the cleaning step, and drying said part.

8. A lens-casting-mold cleaning method as defined in claim 7, **characterized in that**:
the volatile liquid is warm water; and
the water content of the cleaned part is vaporized by dry air in said drying step.

9. A lens-casting-mold assembling method **characterized by** comprising a positioning step of arranging in opposition, the convex-surface forming surface of the concave mold and the concave-surface forming surface of the convex mold as have been cleaned by the lens-casting-mold cleaning method as defined in claim 7 or 8, and a taping step of winding an adhesive tape onto peripheral surfaces of the concave and convex molds so as to seal a gap between these molds.

10. A lens-casting-mold assembling method as defined in claim 9, **characterized in that**:
said taping step draws out the adhesive tape from an adhesive tape roll of wound adhesive tape beforehand, and then winds the adhesive tape drawn out beforehand, onto the peripheral surfaces of the concave and convex molds.
